# EUROPEAN PATENT SPECIFICATION

(11) **EP 0 233 772 B1**
(45) Date of publication and mention of the grant of the patent: **02.05.1997**
(21) Application number: 87301333.8
(22) Date of filing: 17.02.1987
(51) Int. Cl.: C04B 37/02, F01D 5/02, F16B 4/00

(54) **Metal-ceramic composite bodies**
Aus Metall und Keramik zusammengefügte Körper
Corps composite métal-céramique

(30) Priority: 19.02.1986 JP 32851/86
(43) Date of publication of application: 26.08.1987
(73) Proprietor: NGK INSULATORS, LTD., Nagoya-shi, Aichi 467 (JP)
(72) Inventor: Oda, Isao, Nagoya City Aichi Pref. (JP); Soma, Takao, Nagoya City Aichi Pref. (JP)
(74) Representative: Paget, Hugh Charles Edward

(56) References cited:
- EP-A- 0 156 484
- EP-A- 0 161 081
- EP-A- 0 184 457
- FR-A- 2 574 783
- PATENT ABSTRACTS OF JAPAN, vol. 10, no. 59, (M-459) [2116], 8th March 1986; & JP-A-60 204 902 (ISUZU JIDOSHA K.K.) 16.10.1985
- PATENT ABSTRACTS OF JAPAN, vol. 8, no. 220 (M-330)[1657], 6th October 1984; & JP-A-59 103 902 (MITSUBISHI JUKOGYO K.K.) 15.06.1984

## Description

The invention relates to a composite body of ceramic and metal, which is a turbocharger or gas turbine rotor.

Referring to Fig. 7 of the accompanying drawings, a metal-ceramic composite body has conventionally generally been produced by forming a recessed portion 42 in a joining face of a metallic member 41 and fitting a protruding portion 44 of a ceramic member 43 to be joined into the recessed portion 42.

In the metal-ceramic composite body of the above structure, there is a difference in thermal expansion between the metallic member 41 and the ceramic member 43, so that the joint becomes loose at a high temperature, and in an extreme case, the ceramic member 43 undesirably comes out of the metallic member 41.

The present invention therefore aims to provide a metal-ceramic composite rotor in which there is high joint strength between ceramic member and metallic member over a wide temperature range, so that the risk of loosening of the joint is avoided.

Secondly, stress concentrates at the fitted end of the ceramic member due to the compressive pressure in the fitting, and consequently breakage of the composite body may be caused. Therefore, it is very difficult to obtain metal-ceramic composite bodies having a high reliability.

EP-A-0161081 discloses a metal-ceramic composite gas turbine rotor with a nickel alloy steel shaft having a welded-on tubular end of a metal with a low coefficient of thermal expansion. This shaft is connected at a tapering region to a blade portion by shrink-fitting.

It is, as mentioned, a principal object of the invention to provide metal-ceramic composite rotors which have a high joint strength between ceramic member and metallic member over a wide temperature range of from room temperature to high temperature, thus achieving a high reliability. A second object is to achieve low stress concentration in the ceramic member.

According to the invention, there is provided a metal-ceramic composite rotor as set out in claim 1.

Preferably, in order to achieve a low stress concentration in the ceramic member, a groove is formed extending substantially around the whole periphery of the protruding portion of the ceramic member and the recessed portion of the intermediate member is positioned so that one side of the groove is located at one end of the fitted surfaces of the ceramic member and the intermediate member.

The length of the intermediate member (in the direction of insertion of the ceramic member) may be little more than the length of the recess in it and typically is less than twice the length of the contacting surfaces of the ceramic member and the intermediate member.

The joining of the ceramic member and the intermediate member is effected by press fitting, generally not using any bonding material.

The intermediate member is of metal of a low thermal expansion coefficient less than 12 x 10⁻⁶/°C (room temperature -500°C) more preferably less than 10 x 10⁻⁶/°C, and typically not more than 8 x 10⁻⁶/°C. The main metallic member has a higher thermal expansion coefficient than the intermediate member, i.e. over 12 x 10⁻⁶/°C.

Embodiments of the invention will be described below by way of example with reference to the accompanying drawings, wherein:
Figs. 1a to 1c are partial sectional views of three embodiments of the metal-ceramic composite body according to the invention, respectively;
Figs. 2a and 2b are schematic views respectively in side view partially sectioned and in end view of a composite body according to the invention used for a torsion test, respectively;
Fig. 3 is a graph showing a relation between torsional torque and 2 6/dc in the torsion test;
Fig. 4 is a partial sectional view of the composite body according to the invention used for a tension test;
Fig. 5a is a graph showing a relation between tensile load and a/dc in the tension test;
Fig. 5b is a graph showing a relation between load at break and radius of curvature r of the groove edge located at the end of the fitted surfaces, in the tension test;
Fig. 6 is a partial sectional view of an embodiment of the invention which is a ceramic turbocharger rotor; and
Fig. 7 is a partial sectional view of a conventional metal-ceramic composite body already described.

In the metal-ceramic composite body of the invention, the intermediate member of a metal having a low thermal expansion is arranged between the ceramic member and the metallic member to be joined, and the difference between inner diameter of the recessed portion of the intermediate member and outer diameter of the protruding portion of the ceramic member when pulled out the protruding portion is not less than 0.2% of the outer diameter of the ceramic member, so that sufficient joining strength can be obtained over a wide temperature range of from room temperature to high temperature.

In the invention, the reason why the difference between the outer diameter of the protruding portion of the ceramic member and the inner diameter of the recessed portion of the intermediate member when the protruding portion is pulled out from the recessed portion is limited to not less than 0.2% of the outer diameter of the ceramic member is that when such a difference is less than 0.2%, the joint force between the ceramic member and the intermediate member is insufficient and the joint may slacken at a high temperature in use or the ceramic member may come out from the intermediate member in an extreme case as mentioned below.

Further, stress concentration at the fitted end of the ceramic member, which is frequently caused in conventional techniques, can be avoided by forming a groove around the whole periphery of the protruding portion of the ceramic member and positioning the intermediate member so that the fitted surfaces start at one side edge of the groove. The intermediate member may then cover a part of the groove.

Preferably, the depth of this groove formed around the whole periphery of the protruding portion of the ceramic member is 2-12%, more preferably 3-8% of the outer diameter of the protruding portion. When the depth is much shallower than this tension, the effect of mitigating the stress concentration at the fitted end may be small, while when it is deeper, the stress concentration due to a notch effect may become larger as illustrated below.

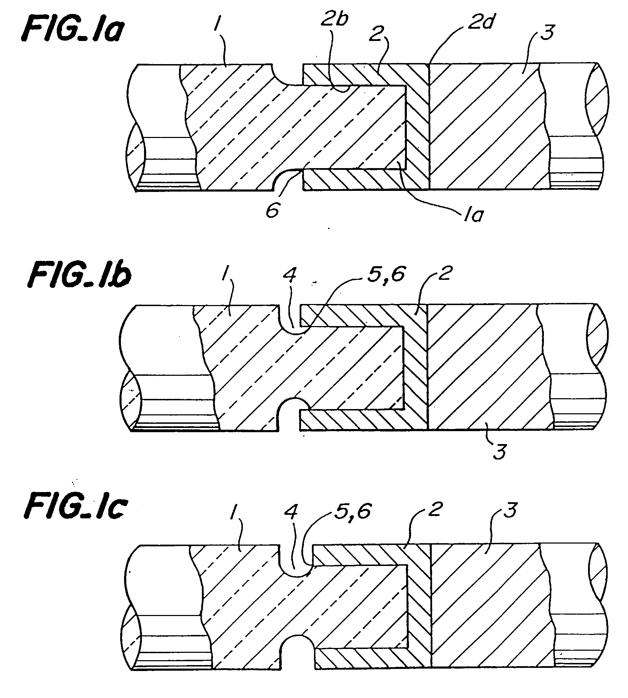

In the embodiments of Figs. 1a-1c, there is a shaft structure in which a ceramic member 1, an intermediate member 2 of a metal having a low thermal expansion, and a metallic member 3 have generally equal outer diameters, but the invention is not limited to this case. In these embodiments, a protruding portion 1a is provided at one end of the ceramic member 1, and the ceramic member 1 is joined to the intermediate member 2 by fitting the protruding portion 1a into a recess 2b formed at one end of the intermediate member 2 by press fitting or other suitable process. The other end 2d of the intermediate member 2 is joined to the metallic member 3 by friction welding. In the embodiments of Figs. 1b and 1c, a groove 4 is formed substantially around the whole periphery of the protruding portion 1a and one side edge 5 of the groove 4 is located at the starting point 6 of fitting of the surfaces of portion la and the recess 2b of the intermediate member 2.

The invention will be illustrated below by the following examples. Examples 1 and 2 illustrate the principle of the joint uses in the present invention.

### Example 1

A number of samples were made and treated as follows.

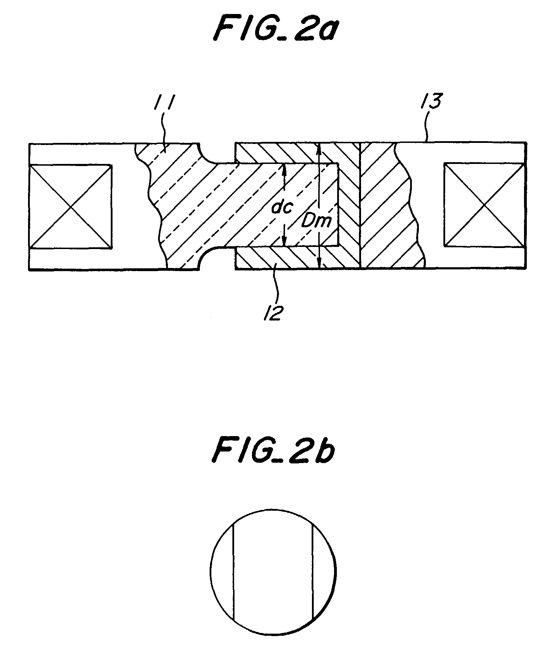

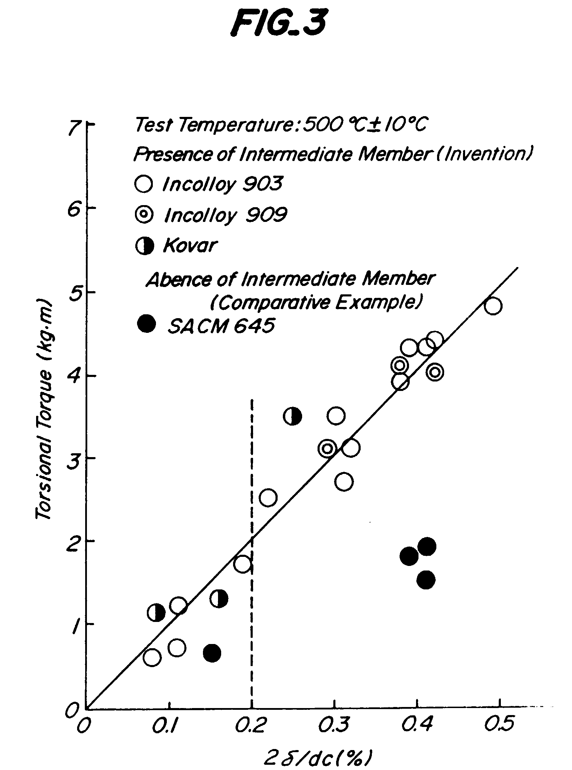

As shown in Figs. 2a and 2b, a ceramic member 11 composed of Si₃N₄ was press fitted into an intermediate member 12 composed of low thermal expansion alloy, Incolloy 903 (trade name) at room temperature, which was then welded to a metallic member 13 composed of SACM 645 to form a composite body for a torsion test. This composite body was subjected to an ageing treatment at 720°C for 8 hours and at 620°C for 10 hours. After torsional torque was measured at 500°C by the torsion test, the ceramic member was pulled out from the intermediate member, and the inner diameter dm of the recess portion of the intermediate member 12 and outer diameter dc of the protruding portion of the ceramic member ll was measured, and the difference 2 δ between the inner diameter dm and outer diameter dc, i.e. 2 δ =dc-dm, was calculated. The results are shown in Fig. 3. The fitted part had such a shape that the diameter of the protruding portion ll was 10 mm, the outer diameter of the intermediate member 12 was 15 mm and the fitting distance (length) was 6 mm. Similarly, the torsional torque and 2 δ was measured by using Incolloy 909 and Kovar as the intermediate member to obtain results also shown in Fig. 3. Similar experiments were performed without the intermediate member. The thermal expansion coefficient of each of the metals used is shown in the following Table 1, as is the coefficient for SNCM 439 used in Example 2.

**TABLE 1**

| Kind of metal | Thermal expansion coefficient (room temperature-500°C)×10⁻⁶/°C |
|---|---|
| Incolloy 903 | 8 |
| Incolloy 909 | 8 |
| Kovar | 6 |
| SACM 645 | 14 |
| SNCM 439 | 14 |

As is seen from Fig. 3, the torsional torque in the products according to the invention containing the intermediate member 12 composed of low thermal expansion metal having 2 δ/dc of about 0.4% is 3.9-4.4 kg^{.}m, while the torsional torque of the product containing no intermediate member is l.5-l.9 kg^{.}m which is not a sufficient joint force. On the other hand, when the product has the intermediate member, if 2 δ/dc is not less than 0.2%, the torsional torque is more than 2 kg^{.}m and a sufficient fitting force is obtained, while if 2 δ/dc is less than 0.2%, a sufficient joint force is not obtained.

### Example 2

Samples were made as follows.

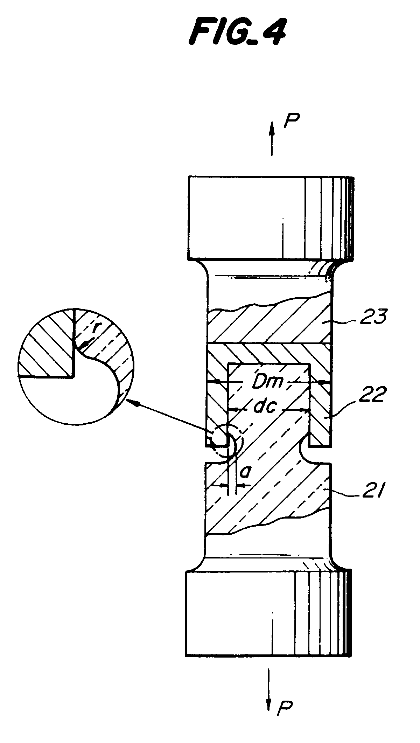

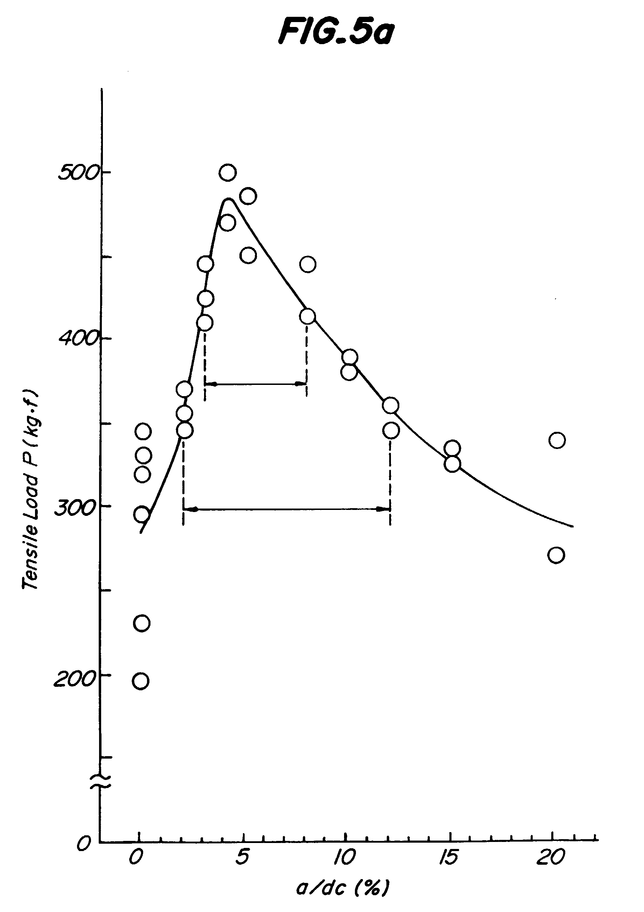

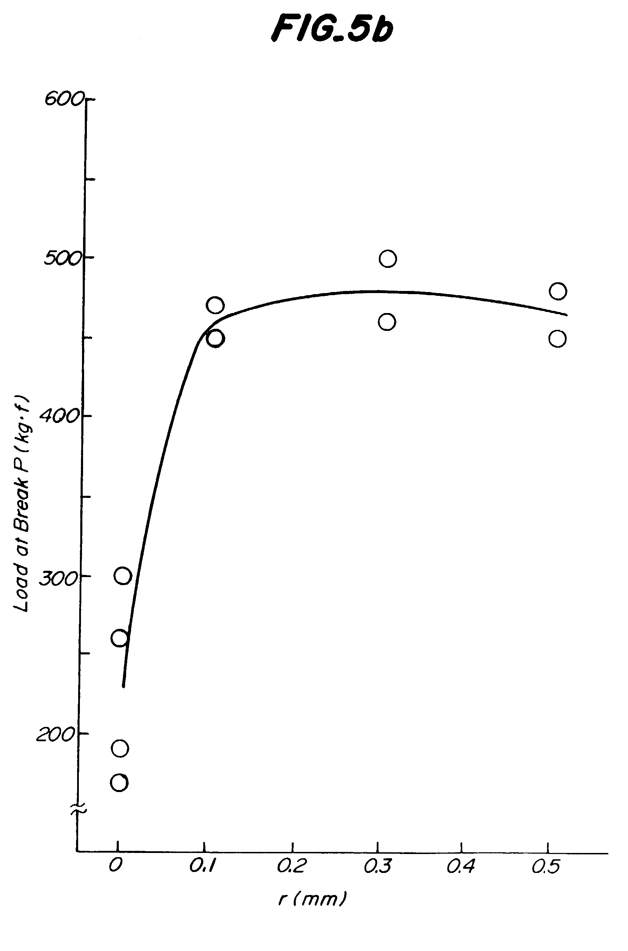

A composite body for tension test was produced by press fitting a ceramic member 21 of Si₃N₄ into an intermediate member 22 composed of Incolloy 903 and welding it to a metallic member 23 composed of SNCM 439 as shown in Fig. 4, and then the load at break was measured under tensile loading P shown in Fig. 4. The results obtained set out as a relation between the depth a of the groove of the ceramic member and the tensile load P when the radius of curvature r of the convex part of the groove side at the starting point of the fitting is about 0.3 mm are shown in Fig. 5a, while the results obtained set out as on a relation between the radius of curvature r of the groove side and the load at break P when the groove depth a is a/dc=4% are shown in Fig. 5b. Moreover, the fitted parts were such that the diameter of the protruding portion of the ceramic member 21 was 11 mm, the outer diameter of the intermediate member 22 was 16 mm, the fitting distance (length) was 8 mm and 2 δ/dc=0.4%.

As is seen from Fig. 5a, when the depth a of the groove formed in the metal-ceramic composite body according to the invention is 2-12% of the outer diameter dc of the protruding portion of the ceramic member, a sufficient tensile strength is obtained, and particularly the tensile strength is excellent when the depth is 3-8%.

As is seen from Fig. 5b, when the end of the groove at the starting point for the fitting is rounded at a radius of curvature of r ≥ 0.1 mm, an excellent joint strength is obtained.

### Example 3

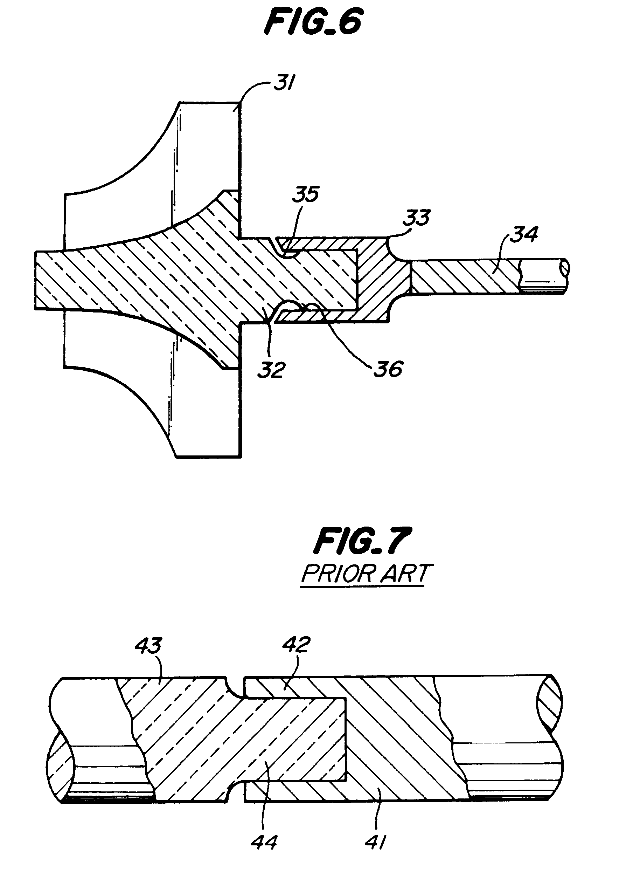

Fig. 6 shows a ceramic turbocharger rotor embodying the invention. In this example, a large shaft portion 32 of 10 mm outer diameter of a turbine wheel 31 of Si₃N₄ having a diameter of 41 mm was fitted into an intermediate member 33 having an outer diameter of 15 mm, which was joined by friction welding to a metallic shaft 34 of SNCM 439. A groove 35 having a depth of a=0.5 mm was formed around the whole periphery of the protruding portion of the ceramic shaft and the intermediate member was positioned so that the groove side 36 is a starting point for the fitted length of the members. The hardness of the shaft portion of SNCM 439 was adjusted by high frequency quenching and tempering.

The ceramic turbocharger rotor was assembled into a high temperature rotation testing machine and a rotation test was carried out at a rotational frequency of 100000 rpm in a combustion gas of 800°C for 50 hours. No accident was observed.

After pulling out of the ceramic turbocharger rotor, 2 δ/dc was found to be 0.42%.

From the above results, it was confirmed that sufficient joint strength can be maintained over a wide temperature range of from room temperature to high temperature when the intermediate member composed of low thermal expansion metal is arranged between the ceramic member and the metallic member and the difference between the inner diameter of the recessed portion of the intermediate member and the outer diameter of the protruding portion of the ceramic member when pulled apart is not less than 0.2%, and that the strength at the fitted part can be enhanced by providing a groove around the whole periphery of the protruding portion of the ceramic member and positioning the recessed portion of the intermediate member so that one side of the groove is a starting point of the fitting.

The invention is not limited to the above examples and many changes and modifications are possible. For instance, silicon carbide, sialon, zirconia, mullite, alumina, beryllia and the like may be used as the ceramic material in addition to Si₃N₄. Furthermore, all low thermal expansion metals as well as Incolloy 903, Incolloy 909 and Kovar may also be used as the intermediate member. Moreover, SNCM 439 and SACM 645 as well as the other metals can be used as the metallic member.

## Claims

1. A metal-ceramic composite body which is a turbocharger or gas turbine rotor and has a protruding portion (1a) of a ceramic member (1,11,21,32) providing a blade portion of the rotor fitted into a recess (2b) of a metallic part providing a shaft portion of the rotor, wherein the metallic part has an intermediate member (2,12,22,33) of a metal of thermal expansion coefficient of less than 12 x 10⁻⁶/°C arranged between the ceramic member (1,11,21,32) and a main metallic member (3,13,23,34), said intermediate member (2,12,22,33) being provided at one end with said recess (2b) and joined at its other end to the main metallic member by welding, wherein the intermediate member (2,12,22,33) has a solid cross-sectional area perpendicular to the rotational axis of the rotor between its end surface contacting the main metallic member (3) and the inner end of the recess (2b) and the protruding portion (1a) of the ceramic member (1,11,21,32) has a solid cross-section throughout its length, the protruding portion (1a) of the ceramic member is press-fitted in said recess (2b) of the intermediate member, the difference between the outer diameter of the protruding portion (1a) of the ceramic member and the diameter of the recess (2b) of the intermediate member when the protruding portion is pulled out from the recess is not less than 0.2% of the outer diameter of the protruding portion, the main and intermediate metallic members are joined by friction welding and the thermal expansion coefficient of the main metallic member is greater than 12 x 10⁻⁶/°C.

2. A metal-ceramic composite body according to claim 1 wherein said protruding portion has a groove (4,35) substantially around its whole periphery, the recess of the intermediate member is positioned so that one side (5,36) of the groove is at one end of the fitted surfaces.

3. A metal-ceramic composite body according to claim 2 wherein said groove has a depth corresponding to 2-12% of the outer diameter of the protruding portion of the ceramic member.

4. A metal-ceramic composite body according to claim 3, wherein said groove (4,35) has a depth corresponding to 3-8% of the outer diameter of the protruding portion of the ceramic member.

5. A metal-ceramic composite body according to any one of claims 1 to 4 wherein the axial length of the intermediate member (2,12,22,33) is less than twice the axial length of the contact surface of the ceramic member and the intermediate member.

## Patentansprüche

1. Metall/Keramik-Verbundkörper in Form eines Rotors eines Turboladers oder einer Gasturbine, bei dem ein vorspringender Abschnitt (1a) eines einen Schaufelabschnitt des Rotors bzw. einen Rotorblattabschnitt bildenden Keramikelements bzw. -glieds (1,11,21,32) in eine Ausnehmung (26) eines einen Wellenabschnitt des Rotors bildenden Metallbauteils eingepaßt ist, wobei der Metallbauteil ein Zwischenelement bzw. -glied (2, 12, 22, 33) aus Metall mit einem Wärmedehnungskoeffizienten von weniger als 12 x 10⁻⁶/°C aufweist, das zwischen dem Keramikelement (1, 11, 21, 32) und einem Metallhauptelement (3, 13, 23, 34) angeordnet ist, wobei das Zwischenelement (2, 12, 22, 33) an einem Ende mit der Ausnehmung (2b) versehen und an seinem anderen Ende durch Schweißen mit dem Metallhauptelement verbunden ist, worin das Zwischenelement (2, 12, 22, 33) im rechten Winkel zur Rotationsachse des Rotors zwischen seiner das Metallhauptelement (3) berührenden Endfläche und dem inneren Ende der Ausnehmung (2b) einen vollen Querschnitt aufweist, und der vorspringende Abschnitt (1a) des Keramikelements (1, 11, 21, 32) über seine gesamte Länge einen vollen Querschnitt aufweist, worin der vorspringende Abschnitt (1a) des Keramikelements in die Ausnehmung (2b) des Zwischenelements preßgepaßt ist, worin die Differenz zwischen dem Außendurchmesser des vorspringenden Abschnitts (1a) des Keramikelements und dem Durchmesser der Ausnehmung (2b) des Zwischenelements bei aus der Ausnehmung herausgezogenem, vorspringenden Abschnitt nicht weniger als 0,2% des Außendurchmessers des vorspringenden Abschnitts ausmacht, worin das Metallhaupt- und das Metallzwischenelement durch Reibungsschweißen miteinander verbunden sind und worin der Wärmedehnungskoeffizient des Metallhauptelements größer als 12 x 10⁻⁶/°C ist.

2. Metall-Keramik-Verbundkörper nach Anspruch 1, worin der vorspringende Abschnitt im wesentlichen um seine gesamte Peripherie eine Nut (4, 35) aufweist und die Ausnehmung des Zwischenelements so positioniert ist, daß sich eine Seite (5, 36) der Nut an einem Ende der aneinandergepaßten Oberflächen befindet.

3. Metall-Keramik-Verbundkörper nach Anspruch 2, worin die Nut eine Tiefe aufweist, die 2-12% des Außendurchmessers des vorspringenden Abschnitts des Keramikelements entspricht.

4. Metall-Keramik-Verbundkörper nach Anspruch 3, worin die Nut (4, 35) eine Tiefe aufweist, die 3-8% des Außendurchmessers des vorspringenden Abschnitts des Keramikelements entspricht.

5. Metall-Keramik-Verbundkörper nach einem der Ansprüche 1 bis 4, worin die Axiallänge des Zwischenelements (2, 12, 22, 33) kleiner ist als die zweifache Axiallänge der Kontaktfläche zwischen Keramikelement und Zwischenelement.

## Revendications

1. Corps composite métal-céramique qui est un rotor de turbocompresseur à suralimentation ou de turbine à gaz et qui comporte une partie saillante (1a) d'un élément céramique (1, 11, 21, 32) réalisant une portion de lame du rotor adaptée dans un évidement (2b) d'une partie métallique réalisant une portion d'arbre du rotor, dans lequel la partie métallique comporte un élément intermédiaire (2, 12, 22, 33) en un métal ayant un coefficient de dilatation thermique inférieur à 12 x 10⁻⁶/°C agencé entre l'élément céramique (1, 11, 21, 32) et un élément métallique principal (3, 13, 23, 34), ledit élément intermédiaire (2, 12, 22, 33) présentant à une extrémité ledit évidement (2b) et relié à son autre extrémité à l'élément métallique principal par soudage, dans lequel l'élément intermédiaire (2, 12, 22, 33) à une zone solide en section transversale perpendiculaire à l'axe de rotation du rotor entre sa surface d'extrémité venant en contact avec l'élément métallique principal (3) et l'extrémité intérieure de l'évidement (2b), et la partie saillante (1a) de l'élément céramique (1, 11, 21, 32) a une section transversale solide sur toute sa longueur, la partie saillante (1a) de l'élément céramique est ajustée par pression dans ledit évidement (2b) de l'élément intermédiaire, la différence entre le diamètre extérieur de la partie saillante (1a) de l'élément céramique et le diamètre de l'évidement (2b) de l'élément intermédiaire lorsque la partie saillante est retirée de l'évidement n'est pas inférieure à 0,2% du diamètre extérieur de la partie saillante, les éléments métalliques principal et intermédiaire étant reliés par soudage par friction, et le coefficient de dilatation thermique de l'élément métallique principal est supérieur à 12 x 10⁻⁶/°C.

2. Corps composite métal-céramique selon la revendication 1, dans lequel ladite partie saillante a une rainure (4, 35) sensiblement autour de toute sa périphérie, l'évidement de l'élément intermédiaire est positionné de façon qu'un côté (5, 36) de la rainure se trouve à une extrémité des surfaces ajustées.

3. Corps composite métal-céramique selon la revendication 2, dans lequel ladite rainure a une profondeur correspondant à 2-12% du diamètre extérieur de la partie saillante de l'élément céramique.

4. Corps composite métal-céramique selon la revendication 3, dans lequel ladite rainure (4, 35) a une profondeur correspondant à 3-8% du diamètre extérieur de la partie saillante de l'élément céramique.

5. Corps composite métal-céramique selon l'une des revendications 1 à 4, dans lequel la longueur axiale de l'élément intermédiaire (2,12,22,33) est inférieure à deux fois la longueur axiale de la surface de contact de l'élément céramique et de l'élément intermédiaire.
